(19) Europäisches Patentamt / European Patent Office / Office européen des brevets

(11) **EP 4 529 492 B1**

(12) **EUROPEAN PATENT SPECIFICATION**

(45) Date of publication and mention
of the grant of the patent:
**29.04.2026  Bulletin 2026/18**

(21) Application number: **23731750.8**

(22) Date of filing: **22.05.2023**

(51) International Patent Classification (IPC):
***B01J 21/06*** (2006.01)          ***C04B 35/46*** (2006.01)
***C04B 35/48*** (2006.01)          ***C04B 35/626*** (2006.01)
***C04B 38/06*** (2006.01)          ***C04B 38/00*** (2006.01)

(52) Cooperative Patent Classification (CPC):
(C-Sets available)
**C04B 38/0645; B01J 21/066; B01J 23/42;
B01J 35/36; B01J 35/38; B01J 35/51;
B01J 35/613; B01J 35/615; B01J 37/0009;
C04B 35/46; C04B 35/48; C04B 35/62655;
C04B 38/009;** C04B 2111/00129; C04B 2111/0081;
(Cont.)

(86) International application number:
**PCT/IB2023/055243**

(87) International publication number:
**WO 2023/228046 (30.11.2023 Gazette 2023/48)**

(54) **SPHERICAL SUPPORT FOR CATALYSTS BASED ON METAL OXIDES OF GROUP IVB AND RELATED MANUFACTURING PROCESS**

KUGELFÖRMIGER TRÄGER FÜR KATALYSATOREN AUF BASIS VON METALLOXIDEN DER GRUPPE IVB UND VERWANDTEM HERSTELLUNGSVERFAHREN

SUPPORT SPHÉRIQUE POUR CATALYSEURS À BASE D'OXYDES MÉTALLIQUES DU GROUPE IVB ET PROCÉDÉ DE FABRICATION ASSOCIÉ

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **23.05.2022  IT 202200010568**

(43) Date of publication of application:
**02.04.2025  Bulletin 2025/14**

(73) Proprietor: **Exacer S.r.l.**
**41049 Sassuolo (IT)**

(72) Inventors:
• **BARALDI, Matteo**
**41121 Modena (IT)**
• **CONTI, Roberto**
**73048 Nardo' (IT)**
• **SCHUBERT-WEISER, Markus Matthias**
**Mannheim (DE)**
• **VARINI, Elena**
**41124 Modena (IT)**

(74) Representative: **Modiano, Micaela Nadia et al**
**Modiano & Partners
Via Meravigli, 16
20123 Milano (IT)**

(56) References cited:
**US-A1- 2011 319 655      US-B2- 10 150 099**

**(Cont. next page)**

(52) Cooperative Patent Classification (CPC): (Cont.)
C04B 2235/3232; C04B 2235/3244;
C04B 2235/3246; C04B 2235/5427;
C04B 2235/6021; C04B 2235/72; C04B 2235/96;
C04B 2235/963

C-Sets
**C04B 38/0645, C04B 35/46, C04B 35/48,
C04B 38/0074**

**Description**

TECHNICAL FIELD

The present invention relates to spherical supports for catalysts based on group IVb metal oxides and to a manufacturing process thereof.

BACKGROUND ART

In the field of catalyst supports, due to the development of new processes, there is an increasing demand for matrices that are alternative to classic ones such as alumina and silica. Increasing interest is being directed toward Group IVb metal oxides, which share the advantage of being rather stable in a basic or acidic reaction environment. For example, the use of titanium dioxide in anatase form is already known in the Claus process and in some fine chemistry synthesis processes. It can also be used as a support for impregnation of noble metals (S. Bagheri et al., Hindawi Publishing Corp., The Scientific World Journal, Vol. 2014, Article ID 727496).

Catalyst supports based on titanium in rutile form are also already known in the literature (WO2006/132918 A1). In addition to good chemical stability, titanium dioxide phases, such as rutile, or particularly anatase, are assumed to interact with the metal and provide oxygen for reaction or catalyze photochemical processes (S. Dafná et al., Molecules 2021, 26: 5363).

If the reaction conditions are particularly extreme and a chemically stable support is required, zirconia, another oxide of a group IVb metal, is well recognized as an appropriate substitute for alumina (WO2013/060628A1) (EP3080071B1). In pure form it is found primarily as a monoclinic phase (P.D.L. Mercera et al., Appl. Catalysis 1991, 71: 363), and US2009/0305882 also describes a procedure for creating a catalyst support containing at least a certain fraction of tetragonal zirconia. The latter patent, in general, presents the idea of being able to provide spherically shaped catalyst supports, provided that the compositions contain a certain amount of binder (almost 1/3 of a "silica-based stabilizer"), which is obviously necessary to ensure its mechanical stability (US2009/0305882).

The tetragonal phase may also be present when zirconia is co-precipitated with dopants, such as $SiO_2$, Sulfate, $TiO_2$, $Y_2O_3$, $La_2O_3$, $CeO_2$, Phosphate, CaO and many others or when they are impregnated directly on the precursor (typically a zirconium hydroxide) (WO2010/101636A2) (A.-K. Aboul-Gheit et al., Egypt. J. Chem. 2012, 55: 509) ( K. Shimizu et al., Catalysis Letters 1998, 54: 153), preferably in a range of 1-15% by weight. These supports, in addition to possessing a high surface area, also show interesting acidic properties and for this very reason they can, for example, replace acid catalysts, such as zeolites, in isomerization reactions (US10384196B2).

On the other hand, it is known to experts that titanium dioxide and zirconium dioxide-based supports are more difficult to form than, for example, alumina supports, because of their lower ability to react with dispersants such as nitric acid. In addition, it is difficult to achieve good porosity and BET surface area on the one hand, and on the other hand still maintain adequate mechanical properties (hardness, abrasion loss).

These metal oxides are typically used as coatings of some supports (C. Agrafiotis, J. Europ. Ceram. Soc. 2000, 20(7): 825) or in the form of cylindrical extrusions (sometimes also with a star-like or three-lobed shape). Some examples of commercial products are S-7001/ESM-271 by Eurosupport B.V. or CRS 31 by Axens SA. US10150099B2 discloses a spherical porous catalyst support consisting of a material comprising a natural sheet silicate comprising an acid-treated calcined bentonite containing $ZrO_2$ in particulate form dispersed throughout the material.

While there is only a small amount of the desired material in the coated support compared to a large portion of inert material that ensures good consistency, extrusions are mostly a poor compromise between porosity/surface area and mechanical properties. Abrasion loss is often much higher than with alumina extrusions and easily reaches values of up to 10% (ASTM D4058-96), making it difficult to use such supports in impregnation processes, where a large amount of precious metal would be lost.

One potential strategy for improving mechanical properties is to add inorganic binders, such as silica, clay, cement, gypsum or alumina, thus reducing the chemical purity of the material. However, by doing in this way, other metals are introduced, which can have a negative influence on the desired process.

The spherical support is required in many chemical processes to facilitate the process or simply to avoid changing the structure of the reactor.

Typical processes for creating spheres, such as agglomeration, dripping, and spheronization, all have some drawbacks.

In particular, the agglomeration process generates a very wide size distribution, and this entails the need to select the product so as to achieve at least a standard deviation of approximately 20%, which however can still lead to high pressure losses in the reactor due to the limited void fraction.

The oil drip process works only with a limited number of raw materials, particularly those that can be dripped to then precipitate and stabilize rapidly. This process is limited to the production of spheres with a maximum of ~3 mm in diameter.

Spheronization on a knurled plate generates, like the agglomeration process, high dimensional standard deviation, imperfections, rejects, and generally spheres with poor mechanical consistency.

DESCRIPTION OF THE INVENTION

The aim of the present invention is to create a spherical catalyst or a support for the catalyst based on group IVb metal oxides (particularly titanium dioxide, zirconium dioxide or doped versions) that exhibits high purity, good sphericity and low standard deviation on the measured diameter. In addition, it must possess high porosity and BET surface area and at the same time good mechanical properties. The invention is defined in the appended claims 1-7.

PREFERRED EMBODIMENTS OF THE INVENTION (PRODUCTS)

The diameter (the horizontal and vertical dimension of ten randomly selected spheres is measured with Mitutoyo ABSOLUTE Digimatic 0-150 mm Carbide OD Jaws calipers, accuracy = +/-0.02 mm resolution = 0.01 mm) is comprised between 3 and 6 mm, preferably between 3.5 and 5.5 mm.

Desired standard deviation for diameter: less than 10%, preferably less than 7.5%, particularly preferred less than 5%. This entails a good void volume of the reactor (preferably greater than 33%, particularly preferred greater than 38%), which offers advantages, for example, in pressure drop.

Porosity (determined by mercury porosimetry-maximum pressure 60,000 psia, contact angle 140°, surface tension 480 dynes/cm. Equipment used is an AutoPore IV made by Micromeritics): minimum 0.20 ml/g, preferably at least 0.25 ml/g, more preferably minimum 0.30 ml/g.

BET surface area (surface is determined with the Brunauer-Emmet-Teller method, using a TriStar II 3020 model instrument made by Micromeritics, after degassing the sample for two hours at 300°C): minimum 25 $m^2$/g for rutile, minimum 50 $m^2$/g, preferably at least 75 $m^2$/g, particularly preferred more than 90 $m^2$/g.

Hardness (the breaking strength of ten randomly selected spheres is measured with Dr. Schleuniger TABLET TESTER 8M instrumentation and then the average value is calculated): minimum 35 N, preferably at least 50 N, especially preferred more than 70 N.

Purity of the active component: minimum 95%, preferably greater than 97.5%, more preferably greater than 98.0%, even more preferably greater than 98.5%, and particularly preferred greater than 99%.

Abrasion loss (ASTM D4058-96): preferably less than 8%, more preferably less than 5%. For $TiO_2$ (rutile)-based materials, preferably less than 3%, and particularly preferred less than 2%.

Heap void fraction (is determined as the ratio of void volume to total volume or more exactly as

$$1 - \frac{\text{heap density}}{\text{geometric or apparent density of the individual sphere}}$$

where heap density corresponds to the tapped density value, geometric density is calculated directly as the ratio of the mass to the calculated volume of a sphere, and apparent density is instead determined by Archimedes' method): preferably greater than 0.3, even more preferably greater than 0.38, and particularly preferred greater than 0.40.

PREFERRED EMBODIMENTS OF THE INVENTION (PROCESS)

The support is produced by means of a process comprising the following steps of:

(a) Producing the pure or doped raw material in powder form by means of a wet chemical process, such as precipitation with subsequent spray drying or flame spraying. This might also include an impregnation step with a dopant.
(b) Mixing the powder with additives in order to improve rheological behavior during extrusion.
(c) Extruding the support with a diameter comprised between 0 and 20%, preferably 5 to 15%, smaller than the desired diameter of the raw sphere.
d) Preliminary cutting, if possible, the extrudate with a length comprised between 80 and 800 mm, preferably between 120 and 500 mm, in order to facilitate the next step.
(e) Cutting the extrudates approximately with the same length as the diameter (to less than 20%, preferably less than 10%, more preferably under 5%) which, depending on the type of device used, can be combined with the subsequent rolling step in a single pass.
(f) Rolling the cylindrical extrudates to a spherical shape by using a dedicated device.

(g) Selection process (optional).

(h) Drying the material (optional).

(i) Calcinating the material at a sufficiently high temperature so as to remove the additives in amounts preferably greater than 90%, more preferably greater than 95%, and particularly preferred above 99%.

DETAILS REGARDING MATERIALS AND PROCESS, WITH DESCRIPTION OF PREFERENCES

Details of previous points:

(a) These raw materials are commercially available. Titanium dioxide precursor materials are preferably pure anatase or rutile (minimum purity 95%, preferably less than 97.5%, more preferably less than 98.5%, and particularly preferred less than 99%) or co-precipitations of the oxide, or the respective hydroxide or oxyhydrate with or without a dopant element, such as Al, Si, Zr with 85% minimum desired $TiO_2$ content. Preferably, the surface area of anatase is at least 100 $m^2/g$, the surface area of rutile at least 30 $m^2/g$. Zirconium dioxide precursors are preferably pure zirconia (purity as mentioned above, surface area preferably at least 80 $m^2/g$, particularly preferred minimum 90 $m^2/g$), co-precipitated zirconium compounds (e.g., with W-, Ca-, Y-, Ce-, Si-, Ti-, lanthanum salts or organometallic compounds) or a zirconium precursor that is pre-doped for example with a sulfate or phosphate, with a preferred minimum $ZrO_2$ content of 85%. The starting material could be obtained by precipitation or by means of some spray-drying processes or similar methods. Moisture content is preferably between 1 and 20%, particularly preferred less than 6%.

(b) Inorganic binders, if used, are introduced in quantities of less than 5%, preferably less than 1%. In particular, it is preferable that no other oxide or silicate or precursor thereof (in the form of hydroxide or oxyhydrate) be added. Extrusion additives typically used are graphite, starch, celluloses, vaseline, waxes, or chemically modified varieties of starch.

(c) Extruders can be continuous (e.g., screw extruders) or discontinuous (e.g., piston extruders), with single or multiple outputs. The preferred version is single-output extrusion. It is preferred to extrude a length greater than at least 5 times the diameter of the extrudate before making an initial cut. In particular, the extrudate is cut simultaneously into multiple pieces.

(d) Cutting can be done by blades or wires. Alternatively, the rolling device may have a cutting edge, which cuts directly before the rolling process (single-pass process).

(e) During the spheronization process *(US2335294A) (US2593469A) (US3104502A) (US3791083A) (US3847000A) (WO200426529A1)*, a force preferably comprised between 1 and 20 N is applied to the mix.

(f) A selection process, in which the poorly formed spheres (e.g., the leading and trailing portions of preliminary and non-preliminary cuts) are removed. Preferably, these can be reused in steps (b) or (c).

(g) Drying preferably occurs with an air stream at a temperature comprised between 80 and 330°C, more preferably at a temperature comprised between 90 and 130°C. Drying can take place in a static dryer as well as in a continuous dryer.

(h) Calcination is preferably carried out at a temperature comprised between 330°C and 1100°C, more preferably comprised between 400 and 650°C, and even more preferably comprised between 500 and 600°C. The size of the resulting calcined spheres is generally about 15-30% smaller than the unprocessed size.

After the steps described above and before final packaging, there is usually another control process, such as screening to remove small particles and defective spheres. However, the yield of the selection process for the desired fraction is typically greater than 90%, more preferably 95%, even more preferably greater than 98%.

CONCLUSIONS ON THE ADVANTAGES ACHIEVED

It has been found that the spheres obtained from said production process not only have promising characteristics in general, but also exhibit mechanical properties comparable to, if not sometimes better than, those of commercially available cylindrical extrudates with similar porosity/BET surface area and dimensions/volume.

These spherical supports are usually used for the preparation of catalysts by impregnation with precious metals. The catalytically active material preferably includes at least one metal from the platinum group, even more preferably a metallic compound from the platinum group (e.g., a chloride, nitrate or nitrosyl nitrate) that is used in an impregnation process (preferably dry, i.e., with 100% absorption of a solution by the support) and then converted to the final metal form or metal oxide by means of a thermal and/or chemical treatment. The content of the metal or oxide of the platinum group (calculated as metal) is preferably less than 1% and particularly preferred less than 0.5%.

FURTHER EXAMPLES

Examples: comparison of spheres and cylindrical extrudates ($TiO_2$, $ZrO_2$).

| | TiO₂ spheres | ZrO₂ spheres | TiO₂ extrudates | ZrO₂ extrudates |
|---|---|---|---|---|
| **Diameter [mm]** | 4.5 | 4.4 | 3 | 3 |
| **Standard deviation of diameter [mm]** | 0.080 | 0.082 | | |
| **Length [mm]** | | | 5 | 5 |
| **Porosity [ml Hg/g]** | 0.33 | 0.30 | 0.34 | 0.33 |
| **BET surface [m²/g]** | 104 | 83 | 98 | 84 |
| **Hardness [N]** | 68 | 58 | 54 | 72 |
| **Attrition [%]** | 2 | 5 | 3 | 7 |
| **Purity** of **active component [%]** | no less than. 98% TiO₂ | no less than. 99% ZrO₂ | no less than. 98% TiO₂ | no less than. 99% ZrO₂ |
| **Heap void fraction (calculated with geometric density)** | 0.44 | 0.46 | | |
| **Heap void fraction (calculated with** apparent density) | 0.41 | 0.40 | | |

**Claims**

1. A spherical support for catalysts based on metal oxides of group IVb, **characterized in that** it comprises a group IVb metal oxide, has a diameter comprised between 3 and 6 mm, has a purity of no less than 95%, a porosity of no less than 0.25 ml Hg/g, which is measured as defined in the description, a BET surface area of no less than 30 $m^2$/g, which is measured as defined in the description, an average hardness value of no less than 35 N measured on 10 spheres as defined in the description, and an abrasion loss of no more than 8% measured according to ASTM D4058-96.

2. The spherical support according to claim 1, **characterized in that** it is constituted by titanium oxide of the type that derives from a raw material chosen from pure anatase with a BET of no less than 50 $m^2$/g and pure rutile with a minimum BET of 30 $m^2$/g, with a diameter comprised between 3 and 6 mm, with a purity of no less than 95%, a porosity of no less than 0.25 ml Hg/g, an average hardness value of no less than 35 N measured on 10 spheres, and an abrasion loss of no more than 8% measured according to ASTM D4058-96.

3. The spherical support according to claim 1, **characterized in that** it is constituted by zirconium oxide, has a diameter comprised between 3 and 6 mm, and has a purity of no less than 95%, a porosity of no less than 0.25 ml Hg/g, a BET of no less than 50 $m^2$/g, an average hardness value of no less than 35 N measured on 10 spheres, and an abrasion loss of no more than 8% measured according to ASTM D4058-96.

4. A spherical support according to claim 1, **characterized in that** it is constituted by a doped zirconia, chosen from the groups Zr-Al, Zr-Ca, Zr-Ce, Zr-Sulfate, Zr-Phosphate, Zr-Y, Zr-B, Zr-Ca, Zr-Si, Zr-Ge, Zr-Ga or multiples of such dopants of the aforementioned selection, obtained by using a precursor produced by means of a coprecipitation or impregnation process, with a diameter comprised between 3 and 6 mm, with a purity of no less than 95%, a porosity of no less than 0.25 ml Hg/g, a BET of no less than 50 $m^2$/g, an average hardness value of no less than 35 N measured on 10 spheres, and an abrasion loss of no more than 8% measured according to ASTM D4058-96.

5. A spherical support for a catalyst according to at least one of the preceding claims, wherein the standard deviation of the diameter of the spherical support is less than 7.5%.

6. A process for creating a spherical support according to at least one of the preceding claims, i.e., a spherical support constituted by a metal oxide of group IVb, having a diameter comprised between 3 and 6 mm, with a purity of no less than 95%, a porosity of no less than 0.25 ml Hg/g, which is measured as defined in the description, a BET of no less than 30 m²/g, which is measured as defined in the description, an average hardness value of no less than 35 N measured on 10 spheres as defined in the description, and an abrasion loss of no more than 8%, measured according to ASTM D4058-96, produced according to the following production steps of:

- mixing a powder of said metal oxide of group IVb, pure or doped, with water and additives until a paste-like mass is obtained;
- extruding the paste-like mass with a cylindrical shape;
- cutting the extrudate having a cylindrical shape, generating extruded portions having a cylindrical shape;
- rolling the cylindrical extruded portions to give them a spherical shape;
- drying the material;
- calcinating the material.

7. Use of a spherical support according to any one of claims 1 to 5 and obtained by following the process according to claim 6, as a support for active compounds containing metals (or metal oxides) of the platinum group.


**Patentansprüche**

1. Ein kugelförmiger Träger für Katalysatoren auf der Basis von Metalloxiden der Gruppe IVb, **dadurch gekennzeichnet, dass** er ein Metalloxid der Gruppe IVb umfasst, einen Durchmesser zwischen 3 und 6 mm hat, eine Reinheit von mindestens 95% hat, eine Porosität von mindestens 0,25 ml Hg/g, die gemessen wird wie in der Beschreibung definiert, eine BET-Oberfläche von mindestens 30 m²/g, gemessen wie in der Beschreibung definiert, eine durchschnittliche Härte von mindestens 35 N, gemessen an 10 Kugeln wie in der Beschreibung definiert, und einen Abriebverlust von höchstens 8%, gemessen nach ASTM D4058-96.

2. Der kugelförmige Träger gemäß Anspruch 1, **dadurch gekennzeichnet, dass** er aus Titanoxid von der Art besteht, die von einem Rohmaterial abgeleitet ist, das gewählt ist aus reinem Anatas mit einer BET von mindestens 50 m²/g und reinem Rutil mit einer Mindest-BET von 30 m²/g, mit einem Durchmesser zwischen 3 und 6 mm, einer Reinheit von mindestens 95%, einer Porosität von mindestens 0,25 ml Hg/g, einer durchschnittlichen Härte von mindestens 35 N, gemessen an 10 Kugeln, und einem Abriebverlust von höchstens 8%, gemessen nach ASTM D4058-96.

3. Der kugelförmige Träger gemäß Anspruch 1, **dadurch gekennzeichnet, dass** er aus Zirconiumoxid besteht, einen Durchmesser zwischen 3 und 6 mm und eine Reinheit von mindestens 95%, eine Porosität von mindestens 0,25 ml Hg/g, eine BET von mindestens 50 m²/g, eine durchschnittliche Härte von mindestens 35 N, gemessen an 10 Kugeln, und einen Abriebverlust von höchstens 8% hat, gemessen nach ASTM D4058-96.

4. Ein kugelförmiger Träger gemäß Anspruch 1, **dadurch gekennzeichnet, dass** er aus dotiertem Zirconiumoxid besteht, gewählt aus den Gruppen Zr-Al, Zr-Ca, Zr-Ce, Zr-Sulfat, Zr-Phosphat, Zr-Y, Zr-B, Zr-Ca, Zr-Si, Zr-Ge, Zr-Ga oder mehreren solchen Dotierungsmitteln der oben erwähnten Auswahl, gewonnen mit Hilfe einer Vorstufe, die durch einen Mitfällungs- oder Imprägnationsprozess hergestellt wird, mit einem Durchmesser zwischen 3 und 6 mm, einer Reinheit von mindestens 95%, einer Porosität von mindestens 0,25 ml Hg/g, einer BET von mindestens 50 m²/g, einer durchschnittlichen Härte von mindestens 35 N, gemessen an 10 Kugeln, und einem Abriebverlust von höchstens 8%, gemessen nach ASTM D4058-96.

5. Ein kugelförmiger Träger für einen Katalysator gemäß mindestens einem der obigen Ansprüche, wobei die Standardabweichung des Durchmessers des kugelförmigen Trägers weniger als 7,5% beträgt.

6. Ein Verfahren zur Herstellung eines kugelförmigen Trägers gemäß mindestens einem der obigen Ansprüche, d. h. eines kugelförmigen Trägers, der aus einem Metalloxid der Gruppe IVb besteht, einen Durchmesser zwischen 3 und 6 mm, eine Reinheit von mindestens 95%, eine Porosität von mindestens 0,25 ml Hg/g, gemessen wie in der Beschreibung definiert, eine BET von mindestens 30 m²/g, gemessen wie in der Beschreibung definiert, eine durchschnittliche Härte von mindestens 35 N, gemessen an 10 Kugeln wie in der Beschreibung definiert, und einen Abriebverlust von höchstens 8% hat, gemessen nach ASTM D4058-96, hergestellt gemäß folgenden Produktionsschritten:

- Mischen eines Pulvers des Metalloxids der Gruppe IVb, rein oder dotiert, mit Wasser und Zusatzstoffen, bis eine breiähnliche Masse resultiert;
- Extrudieren der breiähnlichen Masse mit einer zylindrischen Form;

- Schneiden des Extrudats mit zylindrischer Form, wodurch extrudierte Teile mit zylindrischer Form erzeugt werden;
- Rollen der zylindrischen extrudierten Teile, um ihnen eine kugelige Form zu verleihen;
- Trocknen des Materials;
- Kalzinieren des Materials.

7. Verwendung eines kugelförmigen Trägers gemäß einem beliebigen der Ansprüche 1 bis 5, hergestellt mit dem Verfahren gemäß Anspruch 6, als Träger für aktive Verbindungen, die Metalle (oder Metalloxide) der Platingruppe enthalten.

**Revendications**

1. Support sphérique pour catalyseurs à base d'oxydes métalliques du groupe IVb, **caractérisé en ce qu'**il comprend un oxyde métallique du groupe IVb, a un diamètre compris entre 3 et 6 mm, a une pureté d'au moins 95 %, une porosité d'au moins 0,25 ml Hg/g, mesurée comme défini dans la description, une surface BET d'au moins 30 $m^2$/g, mesurée comme défini dans la description, une dureté moyenne d'au moins 35 N mesurée sur 10 sphères comme défini dans la description, et une perte par abrasion d'au plus 8 % mesurée selon la norme ASTM D4058-96.

2. Support sphérique selon la revendication 1, **caractérisé en ce qu'**il est constitué d'oxyde de titane du type dérivé d'une matière première choisie parmi l'anatase pure avec une surface BET d'au moins 50 $m^2$/g et le rutile pur avec une surface BET minimale de 30 $m^2$/g, avec un diamètre compris entre 3 et 6 mm, avec une pureté d'au moins 95 %, une porosité d'au moins 0,25 ml Hg/g, une valeur de dureté moyenne d'au moins 35 N mesurée sur 10 sphères, et une perte par abrasion d'au plus 8 % mesurée selon la norme ASTM D4058-96.

3. Le support sphérique selon la revendication 1, **caractérisé en ce qu'**il est constitué d'oxyde de zirconium, a un diamètre compris entre 3 et 6 mm, et a une pureté d'au moins 95 %, une porosité d'au moins 0,25 ml Hg/g, une surface BET d'au moins 50 $m^2$/g, une valeur de dureté moyenne d'au moins 35 N mesurée sur 10 sphères, et une perte par abrasion inférieure ou égale à 8 % mesurée selon la norme ASTM D4058-96.

4. Support sphérique selon la revendication 1, **caractérisé en ce qu'**il est constitué d'une zircone dopée, choisie parmi les groupes Zr-Al, Zr-Ca, Zr-Ce, Zr-Sulfate, Zr-Phosphate, Zr-Y, Zr-B, Zr-Ca, Zr-Si, Zr-Ge, Zr-Ga ou des multiples de ces dopants parmi la sélection susmentionnée, obtenue en utilisant un précurseur produit au moyen d'un procédé de coprécipitation ou d'imprégnation, avec un diamètre compris entre 3 et 6 mm, avec une pureté d'au moins 95 %, une porosité d'au moins 0,25 ml Hg/g, une surface BET d'au moins 50 $m^2$/g, une dureté moyenne d'au moins 35 N mesurée sur 10 sphères, et une perte par abrasion d'au plus 8 % mesurée selon la norme ASTM D4058-96.

5. Support sphérique pour un catalyseur selon au moins l'une des revendications précédentes, où l'écart type du diamètre du support sphérique est inférieur à 7,5 %.

6. Procédé de création d'un support sphérique selon au moins l'une des revendications précédentes, c'est-à-dire un support sphérique constitué d'un oxyde métallique du groupe IVb, ayant un diamètre compris entre 3 et 6 mm, avec une pureté d'au moins 95 %, une porosité d'au moins 0,25 ml Hg/g, mesurée comme défini dans la description, une surface BET d'au moins 30 $m^2$/g, mesurée comme défini dans la description, une valeur de dureté moyenne d'au moins 35 N mesurée sur 10 sphères comme défini dans la description, et une perte par abrasion d'au plus 8 %, mesurée selon la norme ASTM D4058-96, produit selon les étapes de production suivantes:

- mélanger une poudre dudit oxyde métallique du groupe IVb, pur ou dopé, avec de l'eau et des additifs jusqu'à obtenir une masse pâteuse ;
- extruder la masse pâteuse sous forme cylindrique ;
- couper l'extrudat de forme cylindrique, générant des parties extrudées de forme cylindrique ;
- rouler les parties extrudées cylindriques pour leur donner une forme sphérique ;
- sécher le matériau ;
- calciner le matériau.

7. Utilisation d'un support sphérique selon l'une quelconque des revendications 1 à 5 et obtenu en suivant le procédé selon la revendication 6, comme support pour des composés actifs contenant des métaux (ou des oxydes métalliques) du groupe du platine.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2006132918 A1
- WO 2013060628 A1
- EP 3080071 B1
- US 20090305882 A
- WO 2010101636 A2
- US 10384196 B2
- US 10150099 B2
- US 2335294 A
- US 2593469 A
- US 3104502 A
- US 3791083 A
- US 3847000 A
- WO 200426529 A1

### Non-patent literature cited in the description

- **S. BAGHERI et al.** Hindawi Publishing Corp. *The Scientific World Journal*, vol. 2014
- **S. DAFNÁ et al.** *Molecules*, 2021, vol. 26, 5363
- **P.D.L. MERCERA et al.** *Appl. Catalysis*, 1991, vol. 71, 363
- **A.-K. ABOUL-GHEIT et al.** *Egypt. J. Chem.*, 2012, vol. 55, 509
- **K. SHIMIZU et al.** *Catalysis Letters*, 1998, vol. 54, 153
- **C. AGRAFIOTIS**. *J. Europ. Ceram. Soc.*, 2000, vol. 20 (7), 825